# EUROPÄISCHE PATENTSCHRIFT

(11) **EP 3 616 182 B1**
(45) Veröffentlichungstag und Bekanntmachung des Hinweises auf die Patenterteilung: **12.11.2025**
(21) Anmeldenummer: 18712865.7
(22) Anmeldetag: 20.03.2018
(51) Int. Cl.: G08G 1/09, G08G 1/0968, G06F 9/50

(54) **BERECHNUNGSSYSTEM UND VERFAHREN ZUM BETRIEB EINES BERECHNUNGSSYSTEMS**
COMPUTING SYSTEM AND METHOD FOR OPERATING A COMPUTING SYSTEM
SYSTÈME DE CALCUL ET PROCÉDÉ POUR FAIRE FONCTIONNER UN SYSTÈME DE CALCUL

(30) Priorität: 25.04.2017 DE 102017206887
(43) Veröffentlichungstag der Anmeldung: 04.03.2020
(73) Patentinhaber: Audi AG, 85045 Ingolstadt (DE)
(72) Erfinder: PAFFEN, Matthijs, 85123 Karlskron (DE); GRUBER, Hans-Georg, 85049 Ingolstadt (DE); LERZER, Jürgen, 92318 Neumarkt (DE)
(74) Vertreter: Hentrich Patent- & Rechtsanwaltspartnerschaft mbB
(86) Internationale Anmeldenummer: PCT/EP2018/056920
(87) Internationale Veröffentlichungsnummer: WO 2018/197110

(56) Entgegenhaltungen:
- DE-A1- 102012 008 978
- DE-A1- 102012 107 886
- DE-A1- 102015 005 703
- DE-A1- 102015 200 422
- US-A1- 2013 304 863
- US-A1- 2016 091 328

## Beschreibung

Die Erfindung betrifft ein Berechnungssystem, aufweisend wenigstens eine Recheneinrichtung wenigstens eines Kraftfahrzeugs und eine wenigstens eine Recheneinrichtung umfassende Cloud. Daneben betrifft die Erfindung ein Verfahren zum Betrieb eines solchen Berechnungssystems.

In modernen Kraftfahrzeugen wird eine zunehmende Zahl von teilweise anspruchsvoll umzusetzenden Funktionen realisiert, beispielsweise für fortgeschrittene Fahrerassistenzsysteme (ADAS - Advanced Driver Assistance System) und/oder Infotainment-Systeme (IVI - In-vehicle Infotainment). Für derartige und auch weitere moderne, in Kraftfahrzeugen realisierte Funktionen werden eine hohe Rechenleistung und/oder eine hohe Menge an vorzuhaltenden Eingangsdaten benötigt, um die komplexen und/oder langwierigen Berechnungsaufgaben zu lösen. Diesbezügliche Lösungsansätze nutzen meist kraftfahrzeugexterne Servereinrichtungen, zu denen eine drahtlose Kommunikationsverbindung aufgebaut wird. Von diesen Servereinrichtungen können zum einen Informationen abgerufen werden, beispielsweise benötigte, aktuelle Eingangsdaten, zum anderen ist es aber auch denkbar, zumindest Teile der Rechenleistung, die zur Durchführung einer durch eine Applikation realisierte Funktion erforderlich ist, seitens der Servereinrichtung zu realisieren. Die Servereinrichtung kann dabei auch eine Cloud sein oder einen Teil einer Cloud bilden.

Ein Beispiel für berechnungsintensive Funktionen innerhalb eines Kraftfahrzeugs ist die Berechnung von Wegen, insbesondere zur Bestimmung von Fahrtzeiten, zu interessierenden Punkten (POl - Points of Interest) im Rahmen eines Navigationssystems. Hier wünschen Benutzer, also Fahrer des Kraftfahrzeugs, häufig unmittelbar zu sehen, wie lange sie zu dem entsprechenden POI brauchen. Die Berechnung jedoch erfordert eine Routenplanung unter Verwendung einer Vielzahl von Eingangsdaten, welche neben den digitalen Kartendaten beispielsweise auch aktuelle Verkehrsinformationen und dergleichen umfassen. Gerade dann, wenn das Kraftfahrzeug automatisch geführt zu einem POI gefahren werden soll, können auch Aspekte der Trajektorienplanung eingehen. Werden hierfür nun Eingangsdaten und/oder Applikationen bzw. Teilprozesse von Applikationen auf einer Servereinrichtung herangezogen, ist die entsprechende Funktion im Kraftfahrzeug nur dann verfügbar, wenn auch die Kommunikationsverbindung zu der Servereinrichtung existiert, da ansonsten lediglich die an Bord des Kraftfahrzeugs verfügbaren Informationen genutzt werden könnten.

DE 101 05 898 A1 betrifft ein Verfahren zum Übergeben von Zielführungselementen von einem Fahrzeugnavigationsgerät zu einer Zentrale. Dort soll das Fahrzeugnavigationsgerät keine zur Routenberechnung ausreichenden Ressourcen aufweisen, weswegen über eine Kommunikationseinrichtung mit einer Zentrale kommuniziert wird, in welcher die Routen berechnet werden. DE 10 2012 107 886 A1 betrifft ein Verfahren zur elektronischen Erkennung von Verkehrszeichen, bei welchem über eine Kommunikationseinrichtung des Fahrzeugs Daten eines erkannten Grundmusters drahtlos an eine externe Servereinrichtung übermittelt werden, wo mittels eines Mustererkennungsalgorithmus von der externen Servereinheit eine Mustererkennung durchgeführt wird. Als Ergebnis der Mustererkennung werden die Daten des erkannten Verkehrszeichens an die Kommunikationseinheit des Fahrzeugs übermittelt und insbesondere auf einer Anzeigeeinheit ein entsprechendes Verkehrszeichen dargestellt.

Die Dokumente DE 10 2012 008978, US 2013/304863, US 2016/091328 und DE 10 2015 200422 offenbaren ähnliche Systeme und Verfahren.

Neben der Problematik nicht länger verfügbarer Funktionen bei einer Teilauslagerung aus dem Kraftfahrzeug besteht ferner das Problem, dass bei einer getrennten Implementation der Applikation bzw. der Teilprozesse innerhalb des Kraftfahrzeugs oder auf der Servereinrichtung eine Einschränkung der Flexibilität besteht, nachdem entsprechende Softwaremittel und/oder Hardwaremittel kraftfahrzeugspezifisch und/oder serverspezifisch entwickelt werden müssen.

Der Erfindung liegt daher die Aufgabe zugrunde, ein mehr Flexibilität bietendes und insbesondere die Verfügbarkeit von Funktionen innerhalb des Kraftfahrzeugs verbesserndes Berechnungssystem anzugeben.

Zur Lösung dieser Aufgabe ist bei einem Berechnungssystem gemäß Anspruch 1, bei dem wenigstens eine aus Eingangsdaten Ausgangsdaten berechnende Applikation verteilt wenigstens teilweise durch die kraftfahrzeugseitige Recheneinrichtung und wenigstens teilweise cloudseitig ausführbar ist.

Erfindungsgemäß wird also eine Steuereinheit des Berechnungssystems verwendet, welche bevorzugt wenigstens teilweise kraftfahrzeugseitig vorgesehen ist, um dynamisch zu entscheiden, inwieweit die Applikation im Kraftfahrzeug selber oder seitens der mit dem Kraftfahrzeug kommunizierenden Cloud stattfinden soll. Dabei wird es besonders bevorzugt, wenn sowohl die kraftfahrzeugseitige Recheneinrichtung als auch die Cloud bzw. die wenigstens eine Recheneinrichtung der Cloud die Applikation jeweils auch vollständig ausführen können, falls die Umstände dies erfordern, worauf im Folgenden noch näher eingegangen werden wird.

Erfindungsgemäß wird mithin vorgeschlagen, eine verteilte Berechnung von Applikationen zwischen einem Kraftfahrzeug und einer Cloud-Infrastruktur vorzusehen, wobei bevorzugt sowohl die kraftfahrzeugseitige Recheneinrichtung als auch die wenigstens eine cloudseitige Recheneinrichtung auch zur vollständigen Ausführung der Applikation ausgebildet sind. Das Berechnungssystem stellt somit ein verteiltes System dar, in dem Berechnungskomponenten, die auf den kommunizierenden Recheneinrichtungen vorgesehen sind, miteinander kommunizieren und ihre Berechnungsaktionen durch Austausch von Nachrichten koordinieren. Die Berechnungskomponenten interagieren miteinander, um ein bestimmtes Ziel, vorliegend das Ermitteln der Ausgangsdaten der Applikation, zu verfolgen. Die Applikation wird also als sogenanntes verteiltes Computerprogramm umgesetzt, wobei die Applikation insbesondere in verschiedene Teilprozesse aufteilbar ist, die unterschiedlichen Recheneinrichtungen zugewiesen werden können, insbesondere abhängig von wenigstens einem Zuweisungskriterium, das in der Steuereinheit überprüft wird. Die Steuereinheit kann dabei über eine Softwareplattform umgesetzt sein, die die Flexibilität liefert, die Applikation oder einen Teil der Applikation wahlweise auf der kraftfahrzeugseitigen Recheneinrichtung oder innerhalb der Cloud durchzuführen. Dies wiederum gibt die Möglichkeit, Rechenlast zwischen der kraftfahrzeugseitigen Recheneinrichtung und der Cloud zu verschieben und liefert somit die Grundlage für flexible, insbesondere kraftfahrzeugseitige Funktionen, beispielsweise Fahrerassistenzfunktionen und/oder Infotainmentfunktionen, welche nicht spezifisch für die kraftfahrzeugseitige Recheneinrichtung oder die Cloud entwickelt wurden. Die Steuereinheit kann in diesem Zusammenhang Softwareplattformmittel aufweisen, welche die Kompatibilität und Kontextverfügbarkeit der Applikationskomponenten sicherstellt.

Es wird also eine Architektur geschaffen, durch die insbesondere kraftfahrzeugseitig zu nutzende Funktionen, abgebildet durch eine Applikation, dynamisch und flexibel zwischen dem Kraftfahrzeug und einer mit dem Kraftfahrzeug kommunizierenden Cloud verteilt werden können. Vorteilhafterweise können also Applikationen, umfassend ihren Kontext, bzw. deren Teilprozesse so zweckmäßig verteilt werden, dass der größte Vorteil aus der verfügbaren Rechenleistung und den verfügbaren Eingangsdaten auf beiden Seiten gezogen werden kann. Der hier beschriebene, erfindungsgemäße Zugang kann also vorteilhaft genutzt werden, Rechenlast von dem Kraftfahrzeug zur Cloud und/oder von der Cloud zu Kraftfahrzeugen zu verschieben bzw. auszulagern und bietet dabei die Flexibilität, wenigstens eine Applikation entweder in der Cloud oder dem Kraftfahrzeug auszuführen, oder aber eine verteilte Ausführung zu wählen.

Insbesondere im Hinblick auf eine auch vollständig zu ermöglichende Ausführbarkeit seitens des Kraftfahrzeugs und in der Cloud bietet es sich an, hinreichende Eingangsdaten an beiden Orten auf die gleiche Weise, insbesondere also unter Nutzung der gleichen Schnittstelle, bereitzustellen. So sieht eine vorteilhafte Weiterbildung der vorliegenden Erfindung vor, dass kraftfahrzeugseitig und cloudseitig jeweils wenigstens eine durch die Applikation ansprechbare, Eingangsdaten liefernde, für das Kraftfahrzeug und die Cloud gleich strukturierte Datenbank vorgesehen ist. Insbesondere weisen die Datenbanken also gleiche Schnittstellen und/oder gleiche Datenformate/Datenstrukturen auf. Dabei können sich die Inhalte der Datenbanken durchaus unterscheiden. In vielen Fällen wird es so sein, dass die cloudseitige Datenbank eine größere Menge an Informationen als die kraftfahrzeugseitige Datenbank enthält und/oder die cloudseitige Datenbank aktuellere Informationen als die kraftfahrzeugseitige Datenbank enthält. Durch die gleiche Struktur und/oder Kompatibilität der Datenbanken ermöglicht der verteilte Berechnungsansatz die Flexibilität, kraftfahrzeugseitige Applikationen mit einem größeren Datensatz bzw. einem aktuelleren Datensatz auch auf der Cloud auszuführen. Neben dem Vorhandensein eines größeren und/oder aktuelleren Eingangsdatensatzes gilt selbstverständlich weiter fort, dass Rechenlast von der kraftfahrzeugseitigen Recheneinrichtung in die Cloud verschoben werden kann.

Wie bereits erwähnt, weist das Berechnungssystem zweckmäßigerweise eine Steuereinheit zur Verteilung von Teilprozessen der Applikation an die Recheneinrichtungen auf, wobei die kraftfahrzeugseitige Recheneinrichtung wenigstens eine Teilkomponente der Steuereinheit und/oder wenigstens eine mit der Steuereinheit kommunizierende Clienteinheit aufweist. Bevorzugt kann die Steuereinheit bei einem kraftfahrzeugzentrierten Ansatz, bei dem es also hauptsächlich darum geht, im Betrieb des Kraftfahrzeugs zu nutzende und/oder dessen Nutzer unterstützende Funktionen durch die Applikationen zu realisieren, die auch vollständig, zumindest was die Rechenlastverteilung einer kraftfahrzeugseitig vorliegenden Berechnungsaufgabe angeht, innerhalb des Kraftfahrzeugs realisiert sein können, was es ermöglicht, beispielsweise bei einer fehlenden Kommunikationsverbindung dennoch die Applikation durchzuführen, dann vollständig innerhalb des Kraftfahrzeugs.

Dabei werden die Teilprozesse, wie bereits dargelegt wurde, anhand wenigstens eines Zuweisungskriteriums vergeben. Konkret wird hierbei vorgesehen sein, dass die Teilprozesse in Abhängigkeit einer Auslastung der jeweiligen Recheneinrichtungen verteilt werden. Erfindungsgemäß wird eine dynamische Verteilung je nach Auslastung seitens der jeweiligen Recheneinrichtungen erfolgen, so dass dann, wenn auf dem Kraftfahrzeug gerade viel freie Rechenleistung zur Verfügung steht, ein größerer Anteil auf der kraftfahrzeugseitigen Recheneinrichtung durchgeführt werden kann als bei stark ausgelasteten Kraftfahrzeug. Umgekehrt ist es selbstverständlich auch denkbar, bei wenig ausgelastetem Kraftfahrzeug, beispielsweise abgestellten Kraftfahrzeug, eine serverseitig initiierte Applikation wenigstens teilweise auf das Kraftfahrzeug auszulagern. Ein weiteres Zuweisungskriterium**,** das nicht Teil der Erfindung ist, kann die Datenqualität der Eingangsdaten darstellen, so dass dann, wenn seitens der Cloud aktuellere und/oder mehr und/oder genauere Eingangsdaten vorliegen, die Cloud als Ausführungsort für den entsprechenden Teilprozess, der diese Eingangsdaten benötigt, verwendet werden kann. Auch nicht Teil der Erfindung, kann die Verfügbarkeit und/oder Qualität der Kommunikationsverbindung zwischen der Cloud und dem Kraftfahrzeug sein, so dass beispielsweise bei niedriger Qualität der Kommunikationsverbindung Teilprozesse, für die eine große Anzahl von Daten übertragen werden müsste, bevorzugt seitens des Initiators der entsprechenden Instanz der Applikation durchgeführt werden. Dies kann bei großen Datenmengen, welche seitens des Kraftfahrzeugs oder seitens der Cloud erst entstehen, jedoch auch grundsätzlich gelten, so dass beispielsweise vorgesehen sein kann, dass bei einem Sensordaten des Kraftfahrzeugs, also von Sensoren des Kraftfahrzeugs aufgenommenen Sensordaten, auswertenden Teilprozess dieser bevorzugt an die kraftfahrzeugseitige Recheneinrichtung vergeben wird. Noch nicht ausgewertete Sensordaten können meist eine große Datenmenge darstellen, die durch Auswertung in einem Teilprozess zunächst reduziert werden kann, um die Kommunikationsverbindung weniger auszulasten, insbesondere dann, wenn deren Qualität eher schlecht ist.

Bezüglich der Kommunikationsverbindung zwischen dem Kraftfahrzeug und der Cloud kann vorgesehen sein, dass diese ein Mobilfunknetz und/oder ein lokales drahtloses Netzwerk und/oder eine Kommunikationsleitung eines Ladekabels bei einem zum Laden angeschlossenen Kraftfahrzeug umfasst. Die Kommunikationsverbindung wird mithin in den meisten Fällen drahtlos sein, wobei in Ausnahmen auch drahtgebundene Kommunikationsverbindungen gegeben und somit nutzbar sein können, beispielsweise dann, wenn ein Ladekabel zum Laden einer in dem Kraftfahrzeug verbauten Batterie eingesetzt wird, welches auch zum Datenaustausch mit einer hohen Bandbreite ausgebildet ist und somit eine besonders gute Kommunikationsverbindung in die Cloud ermöglichen kann. Bezüglich der drahtlosen Kommunikationsverbindungen kann der Informationsaustausch zwischen der Cloud und dem Kraftfahrzeug, insbesondere der Nachrichten bei der verteilten Berechnung, über ein Mobilfunknetz und/oder ein lokales drahtloses Netzwerk, beispielsweise ein WLAN-Netzwerk, erfolgen.

Neben Nachrichten bezüglich der verteilten Berechnung können auch wenigstens Teilprozesse der Applikationen realisierende Softwaremittel zwischen dem Kraftfahrzeug und der Cloud austauschbar sein. Auf diese Weise ist es auch möglich, Aktualisierungen vorzunehmen und/oder Softwaremittel zur Realisierung der Applikation nicht zwangsläufig an beiden Orten vorzuhalten, sondern beispielsweise erst dann bereitzustellen, wenn diese zur verteilten Berechnung benötigt werden. Auf diese Weise können Speicherplatzanforderungen gegebenenfalls weiter reduziert werden.

In besonders vorteilhafter Ausgestaltung der vorliegenden Erfindung kann vorgesehen sein, dass wenigstens eine der wenigstens einen Applikation eine beim Fahrbetrieb des Kraftfahrzeugs zu verwendende und/oder zur Unterstützung eines Fahrers des Kraftfahrzeugs dienende Kraftfahrzeugfunktion, insbesondere eine Navigationsfunktion, realisiert. Gerade für die eingangs diskutierten, komplexen, modernen Funktionen, die in Kraftfahrzeugen bereitgestellt werden, umfassend insbesondere ADAS-Funktionen und/oder IVI-Funktionen, liefert die Möglichkeit zur flexiblen, verteilten Berechnung entsprechender Applikationen eine Vielzahl von Vorteilen, insbesondere betreffend die Umsetzung aufwendigerer Funktionen, aber gleichzeitig deren bessere Verfügbarkeit, nachdem insbesondere eine Berechnung allein im Kraftfahrzeug weiterhin ermöglicht wird. Sowohl hinsichtlich des Komforts als auch hinsichtlich des Betriebs können Kraftfahrzeuge auf diesem Weg mithin deutlich verbessert werden. In dem Beispiel von Navigationsfunktionen wird dies deutlich, nachdem beispielsweise Teilberechnungen auf die Cloud ausgelagert werden können, wo insbesondere genauere und/oder aktuellere Eingangsdaten bereitstehen und/oder eine größere Rechenleistung zur schnellere Berechnung vorhanden ist. Nichtsdestotrotz muss bei Nichtverfügbarkeit der Kommunikationsverbindung zur Cloud und/oder einer schlechten Qualität der Kommunikationsverbindung zur Cloud nicht zwangsläufig auf die Funktion im Kraftfahrzeug verzichtet werden, da dann auf eine Berechnung innerhalb des Kraftfahrzeugs zurückgegriffen werden kann und die Funktion grundsätzlich durchaus noch bereitsteht.

Neben innerhalb des Kraftfahrzeugs selbst initiierten Berechnungsaufgaben (Applikationen) können selbstverständlich auch in umgekehrter Richtung Berechnungsaufgaben von der Cloud dynamisch in Richtung des wenigstens einen Kraftfahrzeugs ausgelagert werden, was insbesondere dann vorteilhaft ist, wenn eine Mehrzahl von Kraftfahrzeugen Teil des Berechnungssystems ist. So kann mit besonderem Vorteil vorgesehen sein, dass wenigstens eine der wenigstens einen Applikation eine Entwicklungsapplikation umfasst, welche, insbesondere für eine Vielzahl von Kraftfahrzeugen, als Eingangsdaten Betriebsdaten des Kraftfahrzeugs, insbesondere umfassend Sensordaten und/oder Zustandsdaten des Kraftfahrzeugs, auswertet. Eine Cloud-Applikation kann mithin ebenso zumindest teilweise in wenigstens ein Kraftfahrzeug ausgelagert werden, um lokale Berechnungen durchzuführen, insbesondere basierend auf lokalen Eingangsdaten, wie beispielsweise Sensordaten. Insbesondere kann die Cloud-Applikation auf einer Vielzahl von Recheneinrichtungen unterschiedlicher Kraftfahrzeuge ausgeführt werden, um zum einen die verfügbare Rechenleistung von Kraftfahrzeugen auszunutzen, wo sie gerade nicht benötigt wird, zum anderen aber auch eine Vielzahl unterschiedlicher Eingangsdaten zu nutzen, beispielsweise dann, wenn es um eine statistische Auswertung von Sensordaten und/oder sonstigen Betriebsdaten des Kraftfahrzeugs geht, insbesondere im Hinblick auf die Entwicklung neuer Funktionen für Kraftfahrzeuge, neuer Fahrzeugsysteme und/oder im Straßenverkehr einsetzbarer Mittel.

Es sei angemerkt, dass es im Rahmen der vorliegenden Erfindung durchaus auch denkbar ist, dass zusätzlich für wenigstens eine Zusatzapplikation deren Ausführbarkeit auf die kraftfahrzeugseitige Recheneinrichtung und/oder die Cloud beschränkt ist. Der hier beschriebene Zugang zur verteilten Berechnung schränkt mithin nicht die Möglichkeit ein, getrennte Applikationen seitens des Kraftfahrzeugs und/oder der Cloud vorzusehen, beispielsweise für bestimmte Funktionen auch den herkömmlichen Client-Server-Zugang zu wählen, wenn beispielsweise eine Zusatzapplikation aufgrund mangelnder Rechenleistung innerhalb eines Kraftfahrzeugs ohnehin nicht vollständig ausgeführt werden könnte und dergleichen.

Neben dem Berechnungssystem betrifft die vorliegende Erfindung auch ein Verfahren zum Betrieb eines Berechnungssystems, gemäß Anspruch 8.

Weitere Vorteile und Einzelheiten der vorliegenden Erfindung ergeben sich aus den folgenden Ausführungsbeispielen sowie anhand der Zeichnungen. Dabei zeigen:
- Fig. 1: ein erfindungsgemäßes Berechnungssystem, und
- Fig. 2: eine Skizze zum erfindungsgemäßen Verfahren.

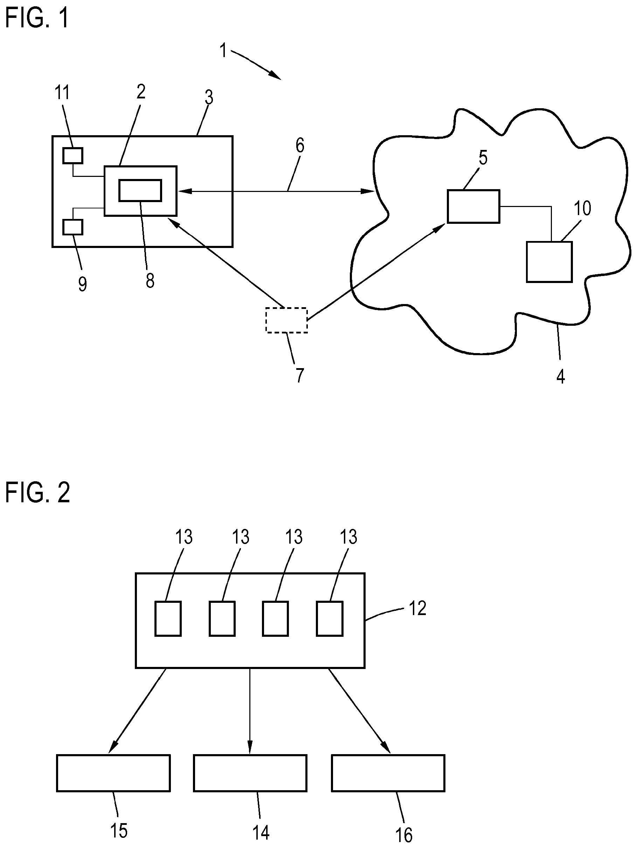

Fig. 1 zeigt eine Prinzipskizze eines erfindungsgemäßen Berechnungssystems 1, welches wenigstens eine Recheneinrichtung 2, insbesondere Recheneinrichtungen 2 verschiedener Kraftfahrzeuge 3, und eine Cloud 4, die wiederum wenigstens eine, üblicherweise mehrere, Recheneinrichtungen 5 umfasst, aufweist. Über eine Kommunikationsverbindung 6 können das Kraftfahrzeug 3, respektive die Recheneinrichtung 2, und die Cloud 4 kommunizieren, wobei die Kommunikationsverbindung 6, auch über die Zeit, unterschiedlich ausgebildet sein kann, in den meisten Fällen jedoch zumindest eine drahtlose Teilstrecke unter Verwendung eines Mobilfunknetzes und/oder eines lokalen drahtlosen Netzwerks umfassen wird. Die Kommunikationsverbindung 6 kann, falls anwendbar, auch über ein Ladekabel zum Laden einer Batterie des Kraftfahrzeugs 3 besonders breitbandig kabelgebunden hergestellt werden. Das Berechnungssystem 1 umfasst ferner eine hier nur angedeutete Steuereinheit 7, die verteilt realisiert werden kann, mithin Steuerkomponenten sowohl in der Recheneinrichtung 2 als auch in der Recheneinrichtung 5 aufweisen kann.

Das Berechnungssystem 1 ist mittels der Steuereinheit 7 nun dazu ausgebildet, Applikationen, die aus Eingangsdaten Ausgangsdaten berechnen sollen, verteilt innerhalb des Berechnungssystems 1 auszuführen, insbesondere also wenigstens teilweise auf der kraftfahrzeugseitigen Recheneinrichtung 2 und innerhalb der Cloud 4. Dabei sind zwei vorteilhafte Besonderheiten gegeben. Zum einen ist die Applikation auch vollständig sowohl im Kraftfahrzeug 3 als auch in der Cloud 4 ausführbar, das bedeutet, Programmmittel zur Applikation liegen sowohl im Kraftfahrzeug 3 als auch in der Cloud 4 vor oder sind dort zumindest anwendbar, wenn die Programmmittel über die Kommunikationsverbindung 6 auch austauschbar sind. Hierzu kann die Steuereinheit 7 als Teil der kraftfahrzeugseitigen Recheneinrichtung 2 beispielsweise Softwareplattformmittel 8 aufweisen, die die Kompatibilität bzw. Ausführbarkeit solcher Softwaremittel sicherstellen; entsprechende Softwareplattformmittel können selbstverständlich auch seitens der Cloud 4 vorliegen. Die Applikation wurde mithin nicht allein für die Cloud 4 oder allein für das Kraftfahrzeug 3 entwickelt, sondern derart, dass eine Ausführung ihrer Softwaremittel an beiden Orten ermöglicht wird.

Um die vollständige Ausführbarkeit sowohl im Kraftfahrzeug 3 als auch in der Cloud 4 zu fördern, insbesondere eine Ausführung der Applikation seitens des Kraftfahrzeugs 3 auch dann zu erlauben, wenn die Kommunikationsverbindung 6 temporär nicht besteht und/oder von schlechter Qualität ist, sind sowohl seitens des Kraftfahrzeugs 3 als auch seitens der Cloud 4 Datenbanken 9, 10 vorgesehen, die gleich strukturiert sind, insbesondere also vorliegend eine gleiche Zugriffsschnittstelle, gleiche Datenformate und gleiche Datenstrukturen aufweisen. Dabei kann es durchaus vorkommen, dass seitens der Cloud 4 in der Datenbank 10 größere Datenmengen und/oder genauere und/oder aktuellere Eingangsdaten für die Applikation vorliegen als in der Datenbank 9, wobei vorteilhaft bei bestehender Kommunikationsverbindung 6 zumindest hinsichtlich der Aktualisierung eine insbesondere regelmäßige Synchronisierung vorgenommen werden kann.

Zuweisungskriterien, die mithin bestimmen, wo welche Teilprozesse einer auszuführenden Applikation realisiert werden sollen, werten dabei vorliegend die aktuelle Auslastung der kraftfahrzeugseitigen Recheneinrichtung 2 sowie der Cloud 4. Mithin sind zumindest solche Komponenten der Steuereinheit 7, die kraftfahrzeugseitig initiierte Applikationen bzw. deren Teilprozesse zuweisen sollen, unabhängig funktionsfähig seitens des Kraftfahrzeugs 3 vorhanden. Dies ermöglicht insbesondere die oben dargelegte allein kraftfahrzeugseitige Ausführung kraftfahrzeugseitig initiierter Applikationen.

Fig. 2 zeigt die durch die flexible Verteilung gegebenen Möglichkeiten nochmals in Form einer entsprechenden Illustration. Ausgeführt werden soll eine Applikation 12, die in mehrere Teilprozesse 13 aufteilbar ist, mithin grundsätzlich verteilt ausgeführt werden kann. Die am häufigsten genutzte Möglichkeit bei der verteilten Berechnung ist dabei eine Aufteilung zwischen der Cloud 4 und der kraftfahrzeugseitigen Recheneinrichtung 2, das bedeutet, Teile der Applikation 12, mithin wenigstens ein Teilprozess 13, werden in der kraftfahrzeugseitigen Recheneinrichtung 2 realisiert, der Rest der Teilprozesse 13 in der Cloud 4 unter Nutzung der dortigen Recheneinrichtungen 5. Dies ist durch den Kasten 14 symbolisiert. Die Kästen 15 und 16 symbolisieren dennoch mögliche weitere Extremfälle, die sich bei Auswertung der Zuweisungskriterien ergeben können, nämlich im Fall des Kastens 15 die vollständige Ausführung seitens des Kraftfahrzeugs 3, im Fall des Kastens 16 die vollständige Ausführung seitens der Cloud 4.

Die Applikation 12 kann dabei, wie bereits dargelegt, eine kraftfahrzeugseitig initiierte Applikation sein, die sich dann auf den Betrieb des Kraftfahrzeugs 3 und/oder die Unterstützung eines Nutzers des Kraftfahrzeugs 3 beziehen kann. Beispielsweise kann die Applikation eine Funktion eines ADAS und/oder eines IVI-Systems realisieren. Hierzu sei ein Beispiel bezüglich eines Navigationssystems, nämlich die Routenberechnung, kurz näher erläutert. Es sei angenommen, dass eine Navigationskarte innerhalb des Kraftfahrzeugs dargestellt wird, in der verschiedene interessierende Punkte (POI) dargestellt sind. Das Navigationssystem soll nun die Funktion bieten, den Nutzer unmittelbar informieren zu können, wie groß der räumliche und zeitliche Abstand zu den verschiedenen POls ist. Die entsprechende Routen-Fahrzeitberechnung als Applikation 12 kann dann verteilt auf das Kraftfahrzeug 3 und die Cloud 4 erfolgen, wobei entsprechend die Zuweisungskriterien im Hinblick auf den aktuellen Betriebszustand des Berechnungssystems 1 ausgewertet werden. Für eine Berechnung von Teilprozessen 13 seitens der Cloud 4 spricht hierbei beispielsweise die genauere, aktuellere und/oder umfangreichere Datenbank 10, wenn die entsprechenden Daten als Eingangsdaten für den Teilprozess 13 benötigt werden; auch größere verfügbare Rechenleistung seitens der Cloud 4 spricht für diese. Sind aber ohnehin Rechenressourcen der Recheneinrichtung 2 verfügbar, basieren die Berechnungen mancher Teilprozesse 13 sogar auf originär im Kraftfahrzeug 3 entstehenden Eingangsdaten, beispielsweise bezüglich des Kraftstoffverbrauchs und/oder eines Umgebungsmodells.

Nachdem das Kraftfahrzeug 3 ja auch eine Datenbank 9 aufweist, lassen sich im Extremfall sogar alle Teilprozesse 13 innerhalb des Kraftfahrzeugs 3 ausführen, so dass die entsprechende Funktion des Navigationssystems in jedem Fall zur Verfügung steht. Ausgangsdaten, die seitens der Cloud 4 entstehen, werden entsprechend an das Kraftfahrzeug 3 zurückübermittelt. Die Ausgangsdaten (Route, seitlicher und räumlicher Abstand) für jeden POI werden mithin erhalten und können innerhalb des Kraftfahrzeugs 3 zur Anzeige gebracht werden.

Auch cloudseitig initiierte Applikationen 12, beispielsweise Entwicklungsapplikationen, können verteilt berechnet werden, was sich beispielsweise immer dann anbietet, wenn Kraftfahrzeuge 3 des Berechnungssystems 1 gerade eine größere Menge an freier Rechenleistung bereitstellen können, beispielsweise im geparkten Zustand, idealerweise dann, wenn das Kraftfahrzeug 3 zum Laden angeschlossen ist, da dann auch hinreichend elektrische Energie sichergestellt ist. Ein anderes Anwendungsgebiet ergibt sich, gerade für Entwicklungsapplikationen, dann, wenn ohnehin Betriebsdaten in Kraftfahrzeugen 3 ausgewertet werden sollen, beispielsweise Sensordaten und dergleichen, insbesondere im Hinblick auf die Entwicklung neuer Fahrzeugsysteme/-funktionen und dergleichen. Dann können entsprechende Teilprozesse die Auswertung der Betriebsdaten des Kraftfahrzeugs 3 gleich vor Ort in der kraftfahrzeugseitigen Recheneinrichtung 2 beginnen und die Ergebnisse auch einer größeren Zahl an Kraftfahrzeugen 3 kann in der Cloud 4 zusammengeführt werden.

## Patentansprüche

1. Berechnungssystem (1), aufweisend wenigstens eine Recheneinrichtung (2) wenigstens eines Kraftfahrzeugs (3) und eine wenigstens eine Recheneinrichtung (5) umfassende Cloud (4), wobei das Berechnungssystem (1) eine Steuereinheit (7) zur dynamischen Verteilung von Teilprozessen (13) wenigstens einer Applikation (12), die eine fahrzeugseitig zu nutzende Funktion abbildet, an die Recheneinrichtungen (2, 5) aufweist, so dass die aus Eingangsdaten Ausgangsdaten berechnende Applikation (12) verteilt wenigstens teilweise durch die kraftfahrzeugseitige Recheneinrichtung (2) und wenigstens teilweise cloudseitig ausführbar ist, wobei neben Nachrichten bezüglich der verteilten Berechnung auch wenigstens Teilprozesse (13) der Applikation (12) realisierende Softwaremittel zwischen dem Kraftfahrzeug (3) und der Cloud (4) austauschbar sind, **dadurch gekennzeichnet, dass** die dynamische Verteilung je nach aktuelle Auslastung seitens der jeweiligen Recheneinrichtungen (2, 5) erfolgt, so dass dann, wenn auf dem Kraftfahrzeug (3) gerade viel freie Rechenleistung zur Verfügung steht, ein größerer Anteil auf der kraftfahrzeugseitigen Recheneinrichtung (2) durchgeführt wird als bei stark ausgelasteten kraftfahrzeugseitigen Recheneinrichtung. (2).

2. Berechnungssystem (1) nach Anspruch 1,
**dadurch gekennzeichnet,**
**dass** kraftfahrzeugseitig und cloudseitig jeweils wenigstens eine durch die Applikation (12) ansprechbare, Eingangsdaten liefernde, für das Kraftfahrzeug (3) und die Cloud (4) gleich strukturierte Datenbank (9, 10) vorgesehen ist, wobei insbesondere die cloudseitige Datenbank (10) eine größere Menge an Informationen als die kraftfahrzeugseitige Datenbank (9) enthält.

3. Berechnungssystem (1) nach Anspruch 1 oder 2,
**dadurch gekennzeichnet,**
**dass** die kraftfahrzeugseitige Recheneinrichtung (2) wenigstens eine Teilkomponente der Steuereinheit (7) und/oder wenigstens eine mit der Steuereinheit (7) kommunizierende Clienteinheit aufweist.

4. Berechnungssystem (1) nach Anspruch 4,
**dadurch gekennzeichnet,**
**dass** bei einem Sensordaten des Kraftfahrzeugs (3) auswertenden Teilprozess (13) dieser bevorzugt an die kraftfahrzeugseitige Recheneinrichtung (2) vergeben wird.

5. Berechnungssystem (1) nach einem der vorangehenden Ansprüche,
**dadurch gekennzeichnet,**
**dass** eine Kommunikationsverbindung (6) zwischen dem Kraftfahrzeug (3) und der Cloud (4) ein Mobilfunknetz und/oder ein lokales drahtloses Netzwerk und/oder eine Kommunikationsleitung eines Ladekabels bei einem zum Laden angeschlossenen Kraftfahrzeug (3) umfasst.

6. Berechnungssystem (1) nach einem der vorangehenden Ansprüche,
**dadurch gekennzeichnet,**
**dass** wenigstens eine der wenigstens einen Applikation (12) eine beim Fahrbetrieb des Kraftfahrzeuges (3) zu verwendende und/oder zur Unterstützung eines Fahrers des Kraftfahrzeuges (3) dienende Kraftfahrzeugfunktion, insbesondere eine Navigationsfunktion, realisiert.

7. Berechnungssystem (1) nach einem der vorangehenden Ansprüche,
**dadurch gekennzeichnet,**
**dass** wenigstens eine der wenigstens einen Applikation (12) eine Entwicklungsapplikation umfasst, welche, insbesondere für eine Vielzahl von Kraftfahrzeugen (3), als Eingangsdaten Betriebsdaten des Kraftfahrzeugs (3), insbesondere umfassend Sensordaten und/oder Zustandsdaten des Kraftfahrzeugs (3), auswertet.

8. Verfahren zum Betrieb eines Berechnungssystems (1), aufweisend wenigstens eine Recheneinrichtung (2) wenigstens eines Kraftfahrzeugs (3) und eine wenigstens eine Recheneinrichtung (5) umfassende Cloud (4), wobei bei einer auszuführenden, aus Eingangsdaten Ausgangsdaten berechnenden, eine kraftfahrzeugseitig zu nutzende Funktion abbildende Applikation (12) eine Steuereinheit (7) des Berechnungssystems (1) Teilprozesse (13) der Applikation (12) dynamisch verteilt wenigstens teilweise durch die kraftfahrzeugseitige Recheneinrichtung (2) und wenigstens teilweise cloudseitig ausführt, wobei neben Nachrichten bezüglich der verteilten Berechnung auch wenigstens Teilprozesse (13) der Applikation (12) realisierende Softwaremittel zwischen dem Kraftfahrzeug (3) und der Cloud (4) ausgetauscht werden, **dadurch gekennzeichnet, dass** die dynamische Verteilung je nach aktuelle Auslastung seitens der jeweiligen Recheneinrichtungen (2, 5) erfolgt, so dass dann, wenn auf dem Kraftfahrzeug (3) gerade viel freie Rechenleistung zur Verfügung steht, ein größerer Anteil auf der kraftfahrzeugseitigen Recheneinrichtung (2) durchgeführt wird als bei stark ausgelasteten kraftfahrzeugseitigen Recheneinrichtung. (2).

## Claims

1. A calculation system (1) comprising at least one computing device (2) of at least one motor vehicle (3) and a cloud (4) comprising at least one computing device (5), wherein the computing system (1) comprises a control unit (7) for dynamically distributing subprocesses (13) of at least one application (12), which maps a function to be used on the vehicle side, to the computing devices (2, 5), so that the application, which calculates output data from input data (12) can be executed at least partially by the vehicle-side computing device (2) and at least partially by the cloud, wherein, in addition to messages relating to the distributed computation, software means implementing at least subprocesses (13) of the application (12) can also be exchanged between the motor vehicle (3) and the cloud (4), **characterized in that** the dynamic distribution takes place depending on the current utilization of the respective computing devices (2, 5), so that when a large amount of free computing power is currently available on the motor vehicle (3), a larger proportion is performed on the vehicle-side computing device (2) than when the vehicle-side computing device is heavily utilized (2)..

2. The calculation system (1) according to claim 1, **characterized in that** at least one database on the motor vehicle side and at least one database on the cloud side, each of which can be addressed by the application (12), supplies input data, and each of which has the same structure for the motor vehicle (3) and the cloud (4) that can be addressed by the application (12), supplies input data (9, 10), and has the same structure for the motor vehicle (3) and the cloud (4), wherein, in particular, the cloud-side database (10) contains a larger amount of information than the motor vehicle-side database (9).

3. The calculation system (1) according to claim 1 or 2, **characterized in that** the vehicle-side computing device (2) has at least one subcomponent of the control unit (7) and/or at least one client unit communicating with the control unit (7).

4. The calculation system (1), according to claim 3, **characterized in that**, in the subprocess (13) evaluating sensor data from the motor vehicle (3), this is preferably assigned to the motor vehicle-side computing device (2).

5. The calculation system (1) according to one of the preceding claims, **characterized in that** a communication connection (6) between the motor vehicle (3) and the cloud (4) comprises a mobile communications network and/or a local wireless network and/or a communication service of a charging cable in the case of a motor vehicle (3) connected for charging.

6. The calculation system (1) according to one of the preceding claims, **characterized in that** at least one of the at least one application (12) implements a motor vehicle function, in particular a navigation function, which is to be used during operation of the motor vehicle (3) and/or serves to assist a driver of the motor vehicle (3).

7. The calculation system (1) according to one of the preceding claims, **characterized in that** at least one of the at least one application (12) comprises a development application which, in particular, evaluates operating data of the motor vehicle (3), in particular comprising sensor data and/or status data of the motor vehicle (3), as input data for a plurality of motor vehicles (3).

8. A method for operating a computing system (1) comprising at least one computing device (2) of at least one motor vehicle (3) and a cloud (4) comprising at least one computing device (5), wherein, in the case of an application (12) to be executed which calculates output data from input data and maps a function to be used on the motor vehicle side, a control unit (7) of the computing system (1) dynamically distributes subprocesses (13) of the application (12) and executes them at least partially on the cloud side, wherein, in addition to messages relating to the distributed calculation, software means implementing at least subprocesses (13) of the application (12) are also exchanged between the motor vehicle (3) and the cloud (4), **characterized in that** the dynamic distribution takes place depending on the current utilization on the part of the respective computing devices (2, 5), so that when a large amount of free computing power is currently available on the motor vehicle (3), a larger proportion is performed on the motor vehicle-side computing device (2) than when the motor vehicle-side computing device is heavily utilized.

## Revendications

1. Système de calcul (1) présentant au moins un appareil de calcul (2) d'au moins un véhicule automobile (3) et un cloud (4) comprenant au moins un appareil de calcul (5),
dans lequel le système de calcul (1) présente un dispositif de commande (7) pour la distribution dynamique de sous-processus (13) d'au moins une application (12), qui représente une fonction à utiliser côté véhicule, aux appareils de calcul (2, 5), de sorte que l'application (12) calculant des données de sortie à partir de données d'entrée est exécutable au moins partiellement par l'appareil de calcul (2) côté véhicule et au moins partiellement côté cloud, dans lequel des moyens logiciels réalisant au moins des sous-processus (13) de l'application (12) peuvent également être échangés entre le véhicule automobile (3) et le cloud (4) en plus des messages relatifs au calcul distribué, **caractérisé en ce que** la distribution dynamique s'effectue en fonction de la charge
actuelle des appareils de calcul respectifs (2, 5) de sorte que, lorsque le véhicule automobile (3) dispose d'une grande puissance de calcul libre, une plus grande part est effectuée sur l'appareil de calcul côté véhicule automobile (2) que lorsque l'appareil de calcul côté véhicule automobile est fortement sollicité (2).

2. Système de calcul (1) selon la revendication 1,
**caractérisé en ce que**
au moins une base de données (9, 10) pouvant être adressée par l'application (12) et fournissant des données d'entrée est prévue côté véhicule et côté cloud et est structurée de manière identique pour le véhicule (3) et le cloud (4), dans lequel la base de données côté cloud (10) contient en particulier une plus grande quantité d'informations que la base de données côté véhicule (9).

3. Système de calcul (1) selon la revendication 1 ou 2,
**caractérisé en ce que**
l'appareil de calcul côté véhicule (2) présente au moins une sous-composante du dispositif de commande (7) et/ou au moins une unité client communiquant avec le dispositif de commande (7).

4. Système de calcul (1) selon la revendication 4,
**caractérisé en ce que**
en cas de sous-processus (13) évaluant des données de capteur du véhicule automobile (3), celui-ci est de préférence attribué à l'appareil de calcul côté véhicule automobile (2).

5. Système de calcul (1) selon l'une quelconque des revendications précédentes,
**caractérisé en ce que**
une liaison de communication (6) entre le véhicule automobile (3) et le cloud (4) comprend un réseau mobile et/ou un réseau local sans fil et/ou une ligne de communication d'un câble de charge pour un véhicule automobile (3) raccordé pour la charge.

6. Système de calcul (1) selon l'une quelconque des revendications précédentes,
**caractérisé en ce que**
au moins une de la au moins une application (12) réalise une fonction de véhicule automobile, en particulier une fonction de navigation, à utiliser lors de la conduite du véhicule automobile (3) et/ou servant à assister un conducteur du véhicule automobile (3).

7. Système de calcul (1) selon l'une quelconque des revendications précédentes,
**caractérisé en ce que**
au moins une de la au moins une application (12) comprend une application de développement, qui, en particulier pour une pluralité de véhicules automobiles (3), évalue comme données d'entrée des données de fonctionnement du véhicule automobile (3) comprenant en particulier des données de capteur et/ou des données d'état du véhicule automobile (3).

8. Procédé de fonctionnement d'un système de calcul (1) présentant au moins un appareil de calcul (2) d'au moins un véhicule automobile (3) et un cloud (4) comprenant au moins un appareil de calcul (5), dans lequel pour une application (12) à exécuter calculant des données de sortie à partir de données d'entrée et représentant une fonction à utiliser côté véhicule automobile, un dispositif de commande (7) du système de calcul (1) distribue de manière dynamique des sous-processus (13) de l'application (12) au moins partiellement par l'appareil de calcul côté véhicule automobile (2) et au moins partiellement par le cloud, dans lequel des moyens logiciels réalisant au moins des sous-processus (13) de l'application (12) peuvent également être échangés entre le véhicule automobile (3) et le cloud (4) en plus des messages relatifs au calcul distribué, **caractérisé en ce que** la distribution dynamique s'effectue en fonction de la charge
actuelle des appareils de calcul respectifs (2, 5) de sorte que, lorsque le véhicule automobile (3) dispose d'une grande puissance de calcul libre, une plus grande part est effectuée sur l'appareil de calcul côté véhicule automobile (2) que lorsque l'appareil de calcul côté véhicule automobile est fortement sollicité (2).
